# EUROPÄISCHE PATENTSCHRIFT

(11) **EP 3 503 753 B1**
(45) Veröffentlichungstag und Bekanntmachung des Hinweises auf die Patenterteilung: **16.06.2021**
(21) Anmeldenummer: 17755519.0
(22) Anmeldetag: 23.08.2017
(51) Int. Cl.: A42B 3/04

(54) **SCHUTZHELM**
PROTECTIVE HELMET
CASQUE DE PROTECTION

(30) Priorität: 26.08.2016 DE 102016115897
(43) Veröffentlichungstag der Anmeldung: 03.07.2019
(73) Patentinhaber: Schuberth GmbH, 39126 Magdeburg (DE)
(72) Erfinder: BECKER, Jan-Christian, 39167 Niederndodeleben (DE); SCHULZ, Thomas, 38154 Koenigslutter am Elm (DE); DITTMER-PETERS, Christian, 38154 Koenigslutter (DE); MOEBIUS, Markus, 39221 Welsleben (DE); HAGEMEIER, Dr.-Ing. Thomas, 39126 Magdeburg (DE)
(74) Vertreter: Patentanwälte Bauer Vorberg Kayser
(86) Internationale Anmeldenummer: PCT/EP2017/071261
(87) Internationale Veröffentlichungsnummer: WO 2018/037057

(56) Entgegenhaltungen:
- WO-A1-2012/017836
- JP-A- 2000 328 342
- US-A- 5 357 409
- US-A1- 2014 189 938

## Beschreibung

Die Erfindung betrifft einen Schutzhelm und Insbesondere einen Motorradschutzhelm.

Moderne Schutzhelme weisen nicht nur mechanische Vorrichtungen und Merkmale wie etwa ein Visier, eine Belüftung und Turbulatoren auf, sondern zunehmend auch elektrische Vorrichtungen, welche entweder fest an dem Schutzhelm vorgesehen sind oder nachgerüstet werden können.

Der Betrieb solcher elektrischer Vorrichtungen erfordert elektrische Energie, welche beispielsweise von einer Batterie bereitgestellt werden kann. Unter dem begriff der Batterie sind hier und nachfolgend sowohl Primärzellen - also nicht wlederaufladbare Energiespeicher - als auch Sekundärzellen - also wiederaufladbare Energiespeicher - zu verstehen. Solche Batterien weisen eine Speicherkapazität auf, welche insbesondere durch ihre Größe und Ihr Gewicht begrenzt ist. Dabei ist es regelmäßig sehr umständlich, die Batterie einer an dem Schutzhelm angeordneten elektrischen Vorrichtung zu wechseln und meistens praktisch nicht möglich, wenn der Träger des Schutzhelms auch Motorradhandschuhe trägt.

Die US 5 357 409 A beschreibt einen beleuchteten Schutzhelm mit einem Schutzkern und mehreren um den Schutzkern angeordneten LEDs. Die LEDs leuchten nacheinander durch eine Steuerschaltung. Ein Gehäuse umschließt die Steuerschaltung und eine Stromquelle zum Versorgen der Steuerschaltung und der LEDs. Das Gehäuse Ist elektrisch mit den LEDs verbunden und abnehmbar am Schutzkern des Schutzhelms befestigt. Eine stoßfeste Hülle oder eine Haut aus dehnbarem Material ist auf der äußeren oder Inneren Oberfläche des Schutzkerns angeordnet.

Die WO 2012/017836 A1 beschreibt, dass in Bezug auf einen Helm, den ein Arbeiter zum Schutz des Kopfes auf einer Baustelle oder an einem anderen Arbeitsplatz trägt, eine Vorrichtung bereitgestellt wird, um durch Anbringen eines Ventilators Luft in den Helm einzuleiten, sodass ein Wärmestau am Kopf des Arbeiters vermieden wird. Die Verwendung eines Batteriepacks für ein Elektrowerkzeug, welches auf einer Baustelle oder an einem anderen Arbeitsplatz verfügbar Ist, als Stromversorgung für eine elektrisches Gerät, das eine Vielzahl von Funktionen einschließlich Belüftung aufweist.

Die US 2014/189938 A1, von welcher die vorliegende Erfindung als nächstkommend ausgeht, zeigt eine in der hinteren Mitte eines Helms angebrachte Batterie. Das Anbringen und Entfernen eines Akkus an und von einem Helm kann mit einem Werkzeug oder von Hand erfolgen. Der Akku kann verwendet werden, um mehrere Geräte über separate Kontakte mit Strom zu versorgen und ein Gerät kann an den Akku angeschlossen werden, während der Akku an einem Helm angebracht Ist.

Die JP 2000 328342 A, von welcher die vorliegende Erfindung als nächstkommend ausgeht, beschreibt einen Helm um die Aufmerksamkeit des Helmträgers auf die Unfallverhütung zu lenken. Dieser Helm wird erhalten, indem ein Detektor zum Erfassen des Kopfes eines Helmträgers und zum Ausgeben eines erfassten Signals und eine akustische Signalerhöhungsvorrichtung zum Ausgeben eines akustischen Signals entsprechend einer voreingestellten Nachricht gemäß dem erfassten Signalausgang des Detektors installiert werden. Ein Lautsprecher gibt eine Stimme aus, die dem akustischen Signal entspricht.

Die Aufgabe der Erfindung besteht darin, einen Schutzhelm derart weiterzuentwickeln und zu verbessern, dass die Verwendung von Batterien für elektrische Vorrichtungen an dem Schutzhelm für den Träger des Schutzhelms erleichtert wird.

Diese Aufgabe wird durch einen Schutzheim mit den Merkmalen des Anspruchs 1 gelöst.

Wesentlich für die Erfindung ist die Erkenntnis, dass an dem Schutzhelm selbst eine Möglichkeit vorgesehen werden kann, eine Batterie lösbar aufzunehmen und mit dieser aufgenommenen Batterie eine elektrische Vorrichtung an dem Schutzhelm zu betreiben. Auf diese Weise wird einerseits ein Austausch der Batterie - beispielsweise nach deren Entladung - ohne Entfernung oder Manipulation der von ihr versorgten elektrischen Vorrichtung ermöglicht. Andererseits kann auch die Batterieaufnahme so gestaltet werden, dass dieser Austausch sehr einfach Ist und auch dann möglich ist, wenn der Träger des Schutzhelms Motorradhandschuhe trägt. Ein weiterer wesentlicher Vorteil ist, dass eine fachgerechte und ökologisch einwandfreie Entsorgung der Batterie erleichtert wird.

Der erfindungsgemäße Schutzhelm, bei dem es sich insbesondere um einen Motorradschutzhelm handeln kann, weist eine Außenschale zur Verteilung von Aufprallkräften, einen mit der Außenschale fest verbundenen Batteriesteckplatz zur lösbaren Aufnahme einer Batterie und eine mit dem Batteriesteckplatz elektrisch verbundene Leitungsanordnung zur Stromversorgung einer mit der Außenschale mechanisch gekoppelten Elektrovorrichtung durch die aufgenommene Batterie auf. Dabei kann diese Elektrovorrichtung Bestandteil des Schutzhelms sein. Die Elektrovorrichtung kann auch separat zum Schutzhelm sein. Die Elektrovorrichtung kann wahlweise lösbar oder fest mit der Außenschale mechanisch gekoppelt sein, wobei diese Kopplung sowohl direkt als auch indirekt - also mittelbar durch eine zwischen Elektrovorrichtung und Außenschale angeordnete Vorrichtung - erfolgen kann. Bei der Leitungsanordnung kann es sich Insbesondere um einen oder mehrere elektrische Leiter handeln, wobei die Leitungsanordnung auch weitere aktive oder passive elektrische Bauteile aufweisen kann.

Vorschlagsgemäß weist der Batteriesteckplatz einen innenseltig zur Außenschale angeordneten Batterierahmen zur formschlüssigen Aufnahme der Batterie auf. Dieser Batterierahmen besteht vorzugsweise im Wesentlichen aus Kunststoff. Die Innenseite der Außenschale ist hier und nachfolgend die konkave Seite der Au-Benschale und damit die dem Kopf des Schutzhelmträgers zugewandte Seite der Außenschale. Der obige Formschluss bei der Aufnahme der Batterie kann In einer, in zwei oder in mehr als zwei Richtungen bestehen. Ein solcher Formschluss ist zum Fixieren der Batterie in dem Batterierahmen besonders geeignet. Vorschlagsgemäß weist der Batterierahmen eine Batterierahmenöffnung zum Einführen der Batterie in den Batterierahmen auf.

Vorschlagsgemäß grenzt der Batterierahmen an einen unteren Rand der Außenschale an und die Batterierahmenöffnung Ist im Wesentlichen an dem unteren Rand der Außenschale angeordnet. Dabei bezieht sich die Richtungsangabe "unten" hier und nachfolgend auf den Schutzhelm im von einer Person getragenen Zustand. Vorzugsweise erstreckt sich der Batterierahmen ausgehend von der Batterierahmenöffnung im Wesentlichen entlang der Außenschale, und zwar insbesondere so, dass die Batterie im Wesentlichen In vertikal oberer Richtung in den Batterierahmen eingeführt wird. Auch hier und nachfolgend bezieht sich die Richtungsangabe der "vertikal oberen" Richtung auf den Schutzhelm im von einer Person getragenen Zustand. Eine solche Anordnung ermöglicht es, die Batterie unter der Außenschale des Schutzhelms unterzubringen ohne das von dem Schutzhelm benötigte Volumen übermäßig zu vergrößern. Ebenso erlaubt diese Anordnung einen besonders komfortablen Zugang des Schutzhelmträgers zu der Batterie.

Eine bevorzugte Ausführungsform des Schutzhelms Ist dadurch gekennzeichnet, dass der Schutzhelm einen fest mit der Außenschale verbundenen Helmabschluss zum zumindest teilweisen Abdecken eines unteren Rands der Außenschale aufweist. Dieser Helmabschluss besteht vorzugsweise im Wesentlichen aus Kunststoff und verhindert Beschädigungen an der Außenschale wenn der unbenutzte Schutzhelm z. B. zu Boden fällt. Vorzugsweise dient der Helmabschluss auch zur unteren Begrenzung des Schutzhelms. Weiter kann es sein, dass der Batterierahmen fest und vorzugsweise formschlüssig mit dem Helmabschluss verbunden ist. Ein solcher Helmabschluss bietet eine Befestigungsmögllchkeit für den Batterierahmen, welche keine Bearbeitung der Außenschale etwa durch Bohrungen erfordert.

Eine weitere bevorzugte Ausführungsform des Schutzhelms Ist dadurch gekennzeichnet, dass die Batterierahmenöffnung seitlich zu einer vertikalen Mittellängsebene des Schutzhelms versetzt angeordnet ist. Diese Mittellängsebene Ist durch einen Vektor In Längsrichtung des Schutzhelms, welche Längsrichtung hier und nachfolgend als Blickrichtung einer den Schutzhelm tragenden Person definiert ist, und einen Vektor in einer vertikalen Richtung beschrieben, welche vertikale Richtung Insbesondere entsprechend der obigen vertikal oberen Richtung definiert ist. Ein seitlicher Versatz zu dieser vertikalen Mittellängsebene Ist also ein Versatz senkrecht zu der Mittellängsebene und daher in einer horizontalen Querrichtung bezogen auf die obige Blickrichtung einer den Schutzhelm tragenden Person. Vorzugsweise ist vorgesehen, dass die Batterierahmenöffnung Im Wesentlichen mittig zwischen einer maximal hinteren und einer maximal seitlichen Position entlang des unteren Rands der Außenschale angeordnet Ist. Diese Anordnung entspricht einem Bereich des unteren Rands, welcher von einer gedachten Mitte des Schutzhelms aus rückwärts diagonal versetzt liegt. Der Bereich eignet sich besonders für einen bequemen Griff der den Schutzhelm tragenden P025 Person an den Schutzhelm ohne dabei das Sichtfeld des Schutzhelms einzuschränken.

Gemäß einer bevorzugten Ausführungsform des Schutzhelms ist vorgesehen, dass der Batteriesteckplatz eine Federvorrichtung zum Vorspannen der aufgenommenen Batterie in Auswurfrichtung und eine Arretieranordnung mit einer Greifvorrichtung zum formschlüssigen Festhalten der aufgenommenen Batterie In dem Batterierahmen aufweist. Auf diese Weise wird die Batterie zumindest teilweise herausgeworfen und kann dann leichter insbesondere mit Handschuhen gegriffen werden. Ein mühsames Herausziehen der Batterie entfällt hiermit. Bevorzugt Ist, dass die Arretieranordnung eine Lösevorrichtung zum Lösen der Greifvorrichtung und zum Auswerfen der aufgenommenen Batterie aus dem Batterierahmen aufweist. Insbesondere kann es sein, dass die Lösevorrichtung durch Drücken betätigbar ist. Auf diese Welse ist sowohl das Verbinden der Batterie mit dem Batterlesteckplatz als auch das Entfernen der Batterie aus dem Batteriesteckplatz durch eine Druckbetätigung möglich, sodass effektiv ein sogenanntes Push-Push-System entsteht.

Vorschlagsgemäß weist der Batteriesteckplatz eine Polanordnung zur elektrischen und lösbaren Kopplung der aufgenommenen Batterie auf. Vorzugsweise ist diese Polanordnung dazu eingerichtet, eine elektrische Verbindung zwischen der aufgenommenen Batterie und der Leitungsanordnung zur Stromversorgung der Elektrovorrichtung bereitzustellen. Vorzugsweise weist dabei die Polanordnung mindestens einen Leistungspol zur Übertragung elektrischer Energie und mindestens einen Signalpol zur Kommunikation mit der aufgenommenen Batterie auf. Vorzugsweise dient der Leistungspol zur Bereitstellung der obigen elektrischen Verbindung. Die obige Kopplung der Polanordnung kann sowohl berührungslos, z. B. Induktiv, als auch mittels einer Kontaktierung durch die Polanordnung bzw. durch den Leistungspol und/oder den Signalpol erfolgen. Durch das Vorsehen des Signalpols kann sowohl der Zustand der Batterie abgefragt als auch ggf. das - unten weiter ausgeführte - Ladeverhalten der Batterie komplexer gestaltet werden, was z. B. die Verschlechterung der Batterie durch die Ladezyklen mildern oder vermeiden kann.

Eine weitere bevorzugte Ausführungsform des Schutzhelms Ist dadurch gekennzeichnet, dass die Polanaordnung an einer der Batterierahmenöffnung gegenüber liegenden Wand des Batterierahmens angeordnet Ist.

Gemäß einer bevorzugten Ausführungsform des Schutzhelms ist vorgesehen, dass der Schutzhelm eine von der Außenschale aufgenommene Innenschicht zur Dämpfung von Aufprallkräften aufweist und dass die Leitungsanordnung zumindest teilweise zwischen der Außenschale und der Innenschicht angeordnet ist. Eine solche Positionierung der Leitungsanordnung erlaubt eine vergleichsweise flexible Führung der Leitungsanordnung bei der diese gleichzeitig auch vor Beschädigungen geschützt ist.

Vorschlagsgemäß ist die Elektrovorrichtung eine Digitalvorrichtung zur drahtlosen Kommunikation. Weiter Ist bevorzugt, dass die Digitalvorrlchtung ein Funkmodul für ein Wireless Personal Area Network (WPAN) ist und insbesondere, dass die Digitalvorrichtung ein Funkmodul für Bluetooth Ist.

Eine weitere bevorzugte Ausführungsform des Schutzhelms ist dadurch gekennzeichnet, dass der Schutzhelm einen elektrisch mit der Leitungsanordnung und mechanisch, vorzugsweise fest, mit der Außenschale gekoppelten Gerätesteckplatz zur Kopplung mit der Elektrovorrichtung aufweist. Diese Kopplung mit der Elektrovorrichtung kann prinzipiell berührungslos oder über eine mechanische Kontaktierung erfolgen. Bevorzugt ist der Gerätesteckplatz zur Kontaktierung der Elektrovorrichtung eingerichtet. Auf diese Welse Ist auch eine Anschlussmöglichkeit für die Elektrovorrichtung fest bei dem Schutzhelm vorgesehen. Insbesondere kann es sein, dass der Gerätesteckplatz zur vorzugsweise lösbaren Aufnahme der Elektrovorrichtung eingerichtet ist. Dies erlaubt dann einen Austausch nicht nur der Batterie, sondern auch der Elektrovorrichtung.

Durch die Batterie und Insbesondere über die Leitungsanordnung können auch mehrere Elektrovorrichtungen mit Strom versorgt werden. Dabei können ein oder mehrere Elektrovorrichtungen an den ggf. mehreren Gerätesteckplätzen kontaktiert werden. Es können aber auch ein oder mehrere Elektrovorrichtungen fest In dem Schutzhelm angeordnet und hartverdrahtet sein, sodass für diese kein Gerätesteckplatz Im obigen Sinne erforderlich Ist.

Gemäß einer bevorzugten Ausführungsform des Schutzhelms ist vorgesehen, dass der Gerätesteckplatz einen innenseltig zur Außenschale angeordneten Geräterahmen zur formschlüssigen Aufnahme der Elektrovorrichtung aufweist. Auch dieser Formschluss bei der Aufnahme der Elektrovorrichtung, welcher zum Fixieren der Elektrovorrichtung In dem Geräterahmen besonders geeignet ist, kann In einer, in zwei oder In mehr als zwei Richtungen bestehen. Vorzugsweise besteht dieser Geräterahmen im Wesentlichen aus Kunststoff. Ebenso vorzugsweise weist der Geräterahmen eine Geräterahmenöffnung zum Einführen der Elektrovorrichtung in den Geräterahmen auf.

Eine bevorzugte Ausführungsform des Schutzhelms Ist dadurch gekennzeichnet, dass der Geräterahmen an einen unteren Rand der Außenschale angrenzt und dass die Geräterahmenöffnung im Wesentlichen an dem unteren Rand der Au-Benschale angeordnet ist. Vorzugsweise erstreckt sich der Geräterahmen ausgehend von der Geräterahmenöffnung Im Wesentlichen entlang der Außenschale, und zwar Insbesondere so, dass die Elektrovorrichtung im Wesentlichen In vertikal oberer Richtung in den Geräterahmen eingeführt wird. Hieraus ergeben sich auch für die Anordnung der Elektrovorrichtung die oben bereits für die entsprechende Ausgestaltung des Batterierahmens und der Batterierahmenöffnung beschriebenen Vorteile. Vorzugswelse ist der Geräterahmen fest und ebenso vorzugsweise formschlüssig mit dem Helmabschluss verbunden.

Eine weitere bevorzugte Ausführungsform des Schutzhelms ist dadurch gekennzeichnet, dass die Geräterahmenöffnung seitlich zu einer vertikalen Mittellängsebene des Schutzhelms versetzt angeordnet ist. Hier kann es ferner sein, dass die Geräterahmenöffnung Im Wesentlichen über die Mittellängsebene gespiegelt zu der Batterierahmenöffnung angeordnet ist. Auf diese Welse wird das einseitige Gewicht der Batterie an dem Helm zumindest teilweise durch die gespiegelte Anordnung der Elektrovorrichtung kompensiert.

Gemäß einer bevorzugten Ausführungsform des Schutzhelms ist vorgesehen, dass der Schutzhelm eine Ladevorrichtung zum Empfang von elektrischer Energie und zum Laden der aufgenommenen Batterie mit der empfangenen elektrischen Energie aufweist. Hier Ist es bevorzugt, dass der Gerätesteckplatz einen Ladepol und Insbesondere einen Ladekontakt zum Empfang der elektrischen Energie aufweist. Dieser Ladepol kann ebenso zur Stromversorgung der Elektrovorrichtung eingerichtet sein. Dieses Laden der aufgenommenen Batterie erfolgt vorzugsweise mittels der Leitungsanordnung. Auf diese Welse kann die Batterie aufgeladen werden, ohne dass sie von dem Batteriesteckplatz entfernt werden muss.

Weiter ist es bevorzugt, dass die Ladevorrichtung eine USB-Vorrichtung (universal serial bus) zum Herstellen einer USB-Verbindung, vorzugsweise zum Anschluss eines USB-Kabels, und zum obigen Empfang der elektrischen Energie über die USB-Verbindung aufweist. Bevorzugt Ist weiter, dass die USB-Vorrichtung von dem Gerätesteckplatz umfasst Ist.

Weitere vorteilhafte und bevorzugte Ausgestaltungen ergeben sich aus der nachfolgenden Beschreibung mit Bezug auf die Figuren. In der lediglich ein Ausführungsbeispiel wiedergebenden Zeichnung zeigt
- Fig. 1: eine schematische hintere Schnittansicht eines Ausführungsbeispiels eines vorschlagsgemäßen Schutzhelms,
- Fig. 2: eine schematische Schnittansicht des Schutzhelms der Fig. 1 mit von der Batterieaufnahme aufgenommener Batterie und
- Fig. 3: eine schematische Schnittansicht des Schutzhelms der Fig.1 ohne von der Batterieaufnahme aufgenommene Batterie.

Bei dem dargestellten vorschlagsgemäßen Schutzhelm handelt es sich um einen Motorradschutzhelm. Er weist eine Außenschale 1 zur Verteilung von Aufprallkräften auf. Im dargestellten Ausführungsbeispiel besteht die Außenschale 1 aus Glasfaser mit einem zugesetzten Spezialharz. Fest mit der Außenschale 1 verbunden Ist der Batteriesteckplatz 2, welcher lösbar eine Batterie 3 aufnehmen kann. Eine Leitungsanordnung 4 Ist mit dem Batteriesteckplatz 2 elektrisch verbunden und dient dazu, eine Elektrovorrichtung 5, bei welcher es sich vorliegend um ein Funkmodul für Bluetooth handelt, mit Strom von der Batterie 3 zu versorgen. Die Elektrovorrichtung 5 ist mit der Außenschale 1 mechanisch gekoppelt, was untenstehend noch näher erläutert wird.

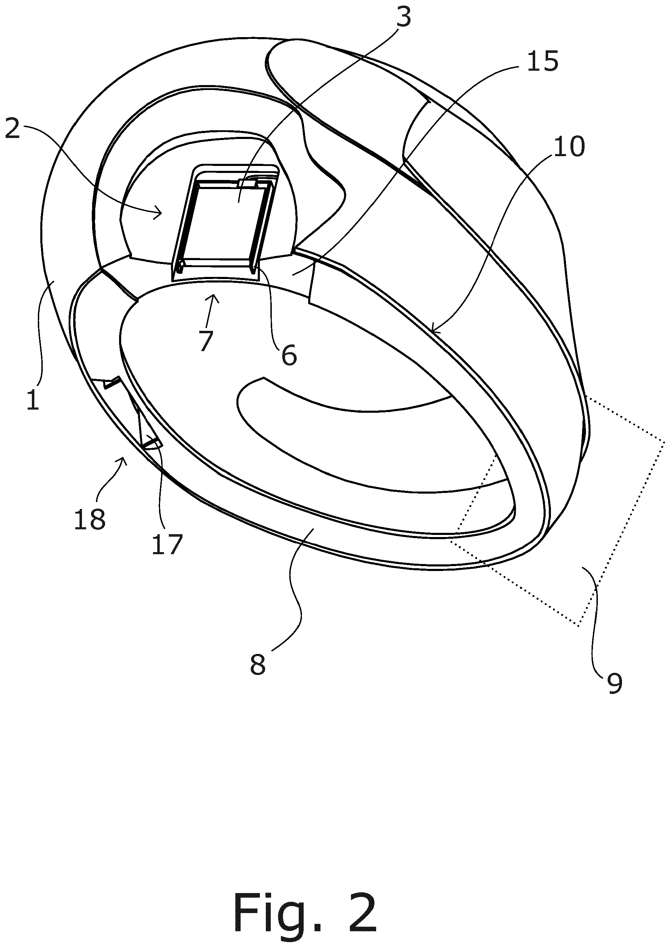

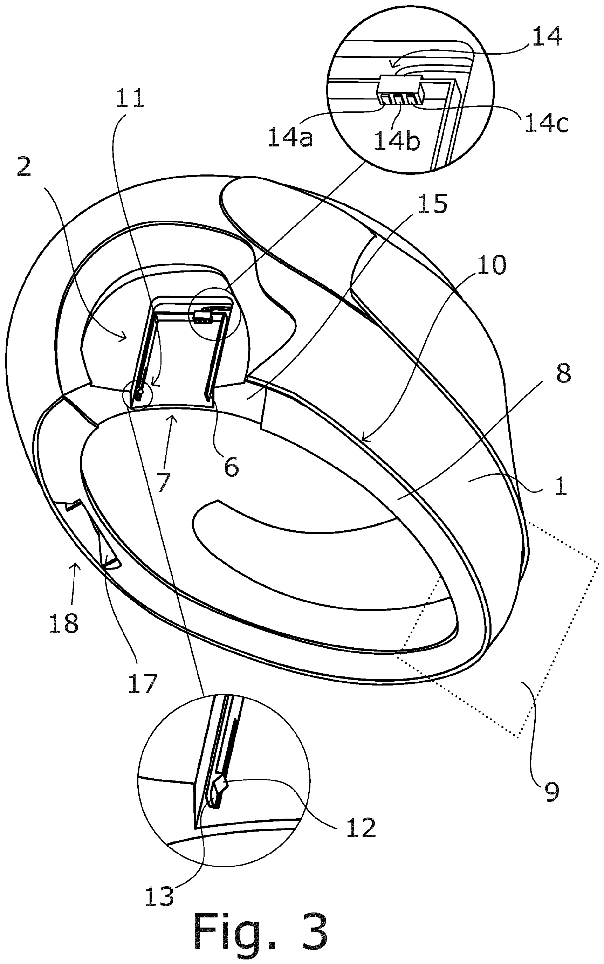

Der aus Kunststoff bestehende Batterierahmen 6 des Batteriesteckplatzes 2 sowie die Batterierahmenöffnung 7 zum Einführen der Batterie 3 In den Batterierahmen 6 Ist sowohl in der Fig. 2 als auch in der Fig. 3 zu erkennen. In der Ebene des Batterierahmens 6 besteht dabei ein Formschluss zwischen der Batterie 3 und dem Batterierahmen 6.

Der Schutzhelm weist einen ebenfalls aus Kunststoff bestehenden Helmabschluss 8 auf, welcher den unteren Rand der Außenschale 1 abdeckt und mit dem der Batterierahmen 6 fest verbunden ist, hier beispielsweise auch durch eine hier nicht gezeigte Schraubverbindung. Dabei bildet die Batterierahmenöffnung 7 auch eine Öffnung des Helmabschlusses 8 und ist so ausgerichtet, dass die Batterie 3 vertikal nach oben und entlang der Außenschale 1 In den Batterierahmen 6 eingeführt wird. Die Anordnung des Batterierahmens 6 sowie der Batterierahmenöffnung 7 ist dabei zwecks komfortablen Zugriffs versetzt zu der in den Fig. 2 und 3 angedeuteten vertikalen Mittellängsebene 9, und zwar senkrecht zu dieser etwa auf halbem Wege bis zu einer maximal seitlichen Position 10 entlang des unteren Rands der Außenschale 1.

Bezüglich der Mechanik des Batterierahmens 6 selbst ist aus der Fig. 2 und insbesondere der Fig. 3 erkennbar, dass der Batteriesteckplatz 2 eine - hier einstückig mit dem Batterierahmen 6 ausgebildete - Arretieranordnung 11 aufweist, welche ihrerseits einen Haken als Greifvorrichtung 12 sowie eine Kontaktfläche als Lösevorrichtung 13 umfasst. Durch Betätigung der Kontaktfläche mittels Druck wird der Haken aus dem Eingriff mit der Batterie 3 gelöst, sodass die Batterie 3 durch eine - hier nicht dargestellte - Federvorrichtung des Batteriesteckplatzes 2 aus dem Batterierahmen zumindest teilweise ausgeworfen wird.

Die Fig. 3 zeigt eine Polanordnung 14, welche einen Leistungspol 14a, einen Signalpol 14b sowie einen Massepol 14c umfasst und mit welcher Polanordnung 14 sowohl Leistung von der Batterie 3 übertragen als auch mit einer entsprechenden Logik der Batterie 3 kommuniziert werden kann.

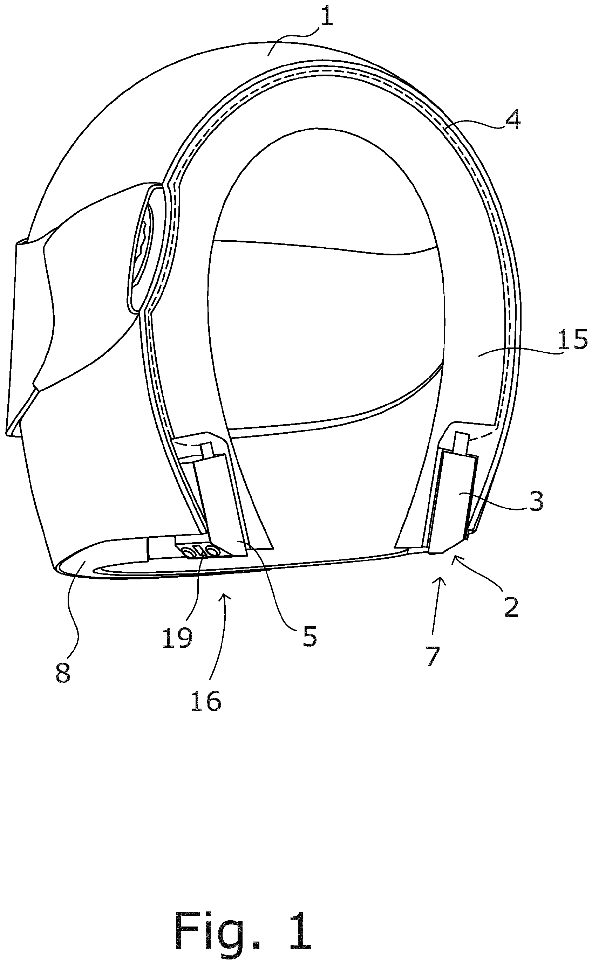

Wie aus der Fig. 1 hervorgeht, ist die Leitungsanordnung 4 zwischen der Außenschale 1 und einer Innenschicht 15 zur Dämpfung von Aufprallkräften angeordnet. Im vorliegenden Ausführungsbeispiel besteht die Innenschicht aus expandiertem Polystyrol (EPS).

Zur Kopplung der Elektrovorrichtung 5 mit der Außenschale 1 weist der Schutzhelm einen In der Fig. 1 erkennbaren Gerätesteckplatz 16 auf, welcher die Elektrovorrichtung 5 lösbar aufnehmen kann. Der Gerätesteckplatz 16 weist einen hier aus Kunststoff bestehenden und nur in den Fig. 2 und 3 dargestellten Geräterahmen 17 auf, welcher innenseitig zur Außenschale 1 angeordnet ist und welcher eine Geräterahmenöffnung 18 zum Einführen und zum Entfernen der Elektrovorrichtung 5 aufweist. Eine Kontaktvorrichtung des Gerätesteckplatzes 15 zur elektrischen Kontaktierung der Elektrovorrichtung 5 ist hier nicht gesondert dargestellt. Der Geräterahmen 17 Ist ebenfalls durch eine Schraubverbindung mit dem Helmabschluss 8 verbunden. Insgesamt Ist die Anordnung des Geräterahmens 17 und Insbesondere die Anordnung der Geräterahmenöffnung 18 Im Wesentlichen mit Bezug auf den Batterierahmen 6 und die Batterierahmenöffnung 7 an der obigen vertikalen Mittellängsebene 9 gespiegelt, sodass sich auch für das Einführen der Elektrovorrichtung 5 in den Geräterahmen 17 Im Wesentlichen die gleichen Merkmale und Vorteile ergeben.

Schließlich ist in der Fig. 1 noch ein USB-Anschluss 19 der Elektrovorrichtung 5 dargestellt, welcher USB-Anschluss mit einer hier nicht dargestellten USB-Vorrichtung des Gerätesteckplatzes 16 gekoppelt ist, bei welcher es sich um eine USB-Buchse handelt und welche USB-Vorrichtung von einer ebenfalls nicht gezeigten Ladevorrichtung des Schutzhelms umfasst Ist. Mit dieser USB-Vorrichtung kann eine USB-Verbindung hergestellt werden, indem hier ein USB-Kabel über den USB-Anschluss 19 der Elektrovorrichtung 5 angeschlossen wird. Bei dem passenden Anschluss des USB-Kabels am jeweils anderen Ende mit einer Versorgungsvorrichtung kann dann die Batterie 3 von dieser Versorgungsvorrichtung über das USB-Kabel und dann über die Leitungsanordnung 4 aufgeladen werden. Es kann auch sein, dass bei Anschluss eines USB-Kabels an den USB-Anschluss 19 der Elektrovorrichtung 5 die USB-Verbindung logisch nur mit der Elektrovorrichtung 5 hergestellt wird und die Elektrovorrichtung 5 diese elektrische Energie dann über einen Ladepol des Gerätesteckplatzes 16 an die Ladevorrichtung abgibt.

## Patentansprüche

1. Schutzhelm, insbesondere Motorradschutzhelm, mit einer Außenschale (1) zur Verteilung von Aufprallkräften, mit einem mit der Außenschale (1) fest verbundenen Batteriesteckplatz (2) zur lösbaren Aufnahme einer Batterie (3) und mit einer mit dem Batteriesteckplatz (2) elektrisch verbundenen Leitungsanordnung (4) zur Stromversorgung einer mit der Außenschale (1) mechanisch gekoppelten Elektrovorrichtung (5) durch die aufgenommene Batterie (3), wobei der Batteriesteckplatz (2) eine Polanordnung (14) zur elektrischen und lösbaren Kopplung der aufgenommenen Batterie (3) aufweist und wobei die Elektrovorrichtung eine Digitalvorrichtung zur drahtlosen Kommunikation ist, **dadurch gekennzeichnet, dass** der Batteriesteckplatz (2) einen innenseitig zur Außenschale angeordneten Batterierahmen (6) zur formschlüssigen Aufnahme der Batterie (3) mit einer Batterierahmenöffnung (7) zum Einführen der Batterie (3) in den Batterierahmen (6) aufweist, dass der Batterierahmen (6) an einen unteren Rand der Außenschale (1) angrenzt und dass die Batterierahmenöffnung (7) im Wesentlichen an dem unteren Rand der Außenschale (1) angeordnet ist.

2. Schutzhelm nach Anspruch 1, **dadurch gekennzeichnet, dass** der Batterierahmen (6) im Wesentlichen aus Kunststoff besteht.

3. Schutzhelm nach Anspruch 1 oder 2, **dadurch gekennzeichnet, dass** sich der Batterierahmen (6) ausgehend von der Batterierahmenöffnung (7) im Wesentlichen entlang der Außenschale (1) erstreckt, insbesondere, sodass die Batterie (3) im Wesentlichen in vertikal oberer Richtung in den Batterierahmen (6) eingeführt wird.

4. Schutzhelm nach einem der Ansprüche 1 bis 3, **dadurch gekennzeichnet, dass** die Batterierahmenöffnung (7) seitlich zu einer vertikalen Mittellängsebene (9) des Schutzhelms versetzt angeordnet ist, vorzugsweise, dass die Batterierahmenöffnung (7) im Wesentlichen mittig zwischen einer maximal hinteren und einer maximal seitlichen Position (10) entlang des unteren Rands der Außenschale (1) angeordnet Ist.

5. Schutzhelm nach einem der Ansprüche 1 bis 4, **dadurch gekennzeichnet, dass** der Schutzhelm einen fest mit der Außenschale (1) verbundenen Helmabschluss (8), vorzugsweise Im Wesentlichen bestehend aus Kunststoff, zum zumindest teilweise Abdecken eines unteren Rands der Außenschale (1), vorzugsweise auch zur unteren Begrenzung des Schutzhelms, aufweist, insbesondere, dass der Batterierahmen (6) fest, vorzugsweise formschlüssig, mit dem Helmabschluss (8) verbunden ist.

6. Schutzhelm nach einem der Ansprüche 1 bis 5, **dadurch gekennzeichnet, dass** der Batteriesteckplatz (2) eine Federvorrichtung zum Vorspannen der aufgenommenen Batterie (3) in Auswurfrichtung und eine Arretieranordnung (11) mit einer Greifvorrichtung (12) zum formschlüssigen Festhalten der aufgenommenen Batterie (3) In dem Batterierahmen (6) aufweist, vorzugsweise, dass die Arretieranordnung (11) eine Lösevorrichtung (13) zum Lösen der Greifvorrichtung (12) und zum Auswerfen der aufgenommenen Batterie (3) aus dem Batterierahmen (6) aufweist, insbesondere, dass die Lösevorrichtung (13) durch Drücken betätigbar ist.

7. Schutzhelm nach einem der Ansprüche 1 bis 6, **dadurch gekennzeichnet, dass** die Polanordnung (14) mindestens einen Leistungspol (14a) zur Übertragung elektrischer Energie und mindestens einen Signalpol (14b) zur Kommunikation mit der aufgenommenen Batterie (3) aufweist.

8. Schutzhelm nach Anspruch 7, **dadurch gekennzeichnet, dass** die Polanordnung (14) an einer der Batterierahmenöffnung (7) gegenüber liegenden Wand des Batterierahmens (6) angeordnet ist.

9. Schutzhelm nach einem der Ansprüche 1 bis 8, **dadurch gekennzeichnet, dass** der Schutzhelm eine von der Außenschale (1) aufgenommene Innenschicht (15) zur Dämpfung von Aufprallkräften aufweist und dass die Leitungsanordnung (4) zumindest teilweise zwischen der Außenschale (1) und der Innenschicht (15) angeordnet ist.

10. Schutzhelm nach einem der Ansprüche 1 bis 9, **dadurch gekennzeichnet, dass** die Digitalvorrichtung ein Funkmodul für ein Wireless Personal Area Network (WPAN) ist, Insbesondere, dass die Digitalvorrichtung ein Funkmodul für Bluetooth ist.

11. Schutzhelm nach einem der Ansprüche 1 bis 10, **dadurch gekennzeichnet, dass** der Schutzhelm einen elektrisch mit der Leitungsanordnung (4) und mechanisch, vorzugsweise fest, mit der Außenschale (1) gekoppelten Gerätesteckplatz (16) zur Kopplung mit der Elektrovorrichtung (5) aufweist, Insbesondere, dass der Gerätesteckplatz (16) zur vorzugsweise lösbaren Aufnahme der Elektrovorrichtung (5) eingerichtet Ist.

12. Schutzhelm nach Anspruch 11, **dadurch gekennzeichnet, dass** der Gerätesteckplatz (16) einen, vorzugsweise im Wesentlichen aus Kunststoff bestehenden, innenseltig zur Außenschale (1) angeordneten Geräterahmen (17) zur formschlüssigen Aufnahme der Elektrovorrichtung (5) mit einer Geräterahmenöffnung (18) zum Einführen der Elektrovorrichtung (5) In den Geräterahmen (17) aufweist.

13. Schutzhelm nach Anspruch 12, **dadurch gekennzeichnet, dass** der Geräterahmen (17) an einen unteren Rand der Außenschale (1) angrenzt und dass die Geräterahmenöffnung (18) im Wesentlichen an dem unteren Rand der Außenschale (1) angeordnet Ist, vorzugsweise, dass sich der Geräterahmen (17) ausgehend von der Geräterahmenöffnung (18) im Wesentlichen entlang der Außenschale (1) erstreckt, Insbesondere, sodass die Elektrovorrichtung (5) Im Wesentlichen in vertikal oberer Richtung in den Geräterahmen (17) eingeführt wird.

14. Schutzhelm nach Anspruch 12 oder 13, **dadurch gekennzeichnet, dass** die Geräterahmenöffnung (18) seitlich zu einer vertikalen Mittellängsebene (9) des Schutzhelms versetzt angeordnet ist, vorzugsweise, dass die Geräterahmenöffnung (18) Im Wesentlichen über die Mittellängsebene (9) gespiegelt zu der Batterierahmenöffnung (7) angeordnet Ist.

15. Schutzhelm nach einem der Ansprüche 1 bis 14, **dadurch gekennzeichnet, dass** der Schutzhelm eine Ladevorrichtung zum Empfang von elektrischer Energie und zum Laden der aufgenommenen Batterie (3) mit der empfangenen elektrischen Energie aufweist, vorzugsweise, dass der Gerätesteckplatz (16) einen Ladepol, insbesondere einen Ladekontakt, zum Empfang der elektrischen Energie aufweist.

## Claims

1. A protective helmet, in particular a protective motorcycle helmet, comprising an outer shell (1) for distributing impact forces, a battery socket (2), which is firmly connected to the outer shell (1), for detachably accommodating a battery (3), and a line assembly (4), which is electrically connected to the battery socket (2), for supplying electricity by means of the accommodated battery (3) to an electric apparatus (5) which is mechanically coupled to the outer shell (1), whereas the battery socket (2) having a pole assembly (14) for the electrical and detachable coupling of the accommodated battery (3), and the electrical device being a digital device for wireless communication, **characterized in that in that** the battery socket (2) has a battery frame (6), arranged on the inside with respect to the outer shell, for receiving the battery (3) in a form-fitting manner, with a battery frame opening (7) for introducing the battery (3) into the battery frame (6), **in that** the battery frame (6) adjoins a lower edge of the outer shell (1), and **in that** the battery frame opening (7) is arranged essentially at the lower edge of the outer shell (1) .

2. The protective helmet according to claim 1, **characterized in that** the battery socket (2) consists substantially of plastic.

3. The protective helmet according to claim 1 or 2, **characterized in that** the battery frame (6), starting at the battery frame opening (7), substantially extends along the outer shell (1), in particular such that the battery (3) is inserted into the battery frame (6) substantially in a vertically upward direction.

4. The protective helmet according to any one of the claims 1 to 3, **characterized in that** the battery frame opening (7) is disposed laterally offset from a vertical central longitudinal plane (9) of the protective helmet, preferably, that the battery frame opening (7) is disposed substantially centrally between a maximally rearward and a maximally lateral position (10) along the lower edge of the outer shell (1).

5. The protective helmet according to any one of the claims 1 to 4, **characterized in that** the protective helmet comprises a helmet trim (8), which is firmly connected to the outer shell (1) and which preferably substantially consists of plastic, for at least partially covering a lower edge of the outer shell (1), preferably also for delimiting the protective helmet in a downward direction, in particular, that the battery frame (6) is firmly, preferably positively, connected to the helmet trim (8).

6. The protective helmet according to any one of the claims 1 to 5, **characterized in that** the battery socket (2) has a spring device for biasing the accommodated battery (3) in the ejection direction and a locking assembly (11) with a gripping device (12) for positively retaining the accommodated battery (3) in the battery frame (6), preferably, that the locking assembly (11) has a release device (13) for releasing the gripping device (12) and for ejecting the accommodated battery (3) from the battery frame (6), in particular, that the release device (13) can be operated by pressing.

7. The protective helmet according to any one of the claims 1 to 6, **characterized in that** the pole assembly (14) has at least one power pole (14a) for transmitting electrical energy and at least one signal pole (14b) for communication with the accommodated battery (3).

8. The protective helmet according to claim 7, **characterized in that** the pole assembly (14) is disposed on a wall of the battery frame (6) that is located opposite to the battery frame opening (7).

9. The protective helmet according to any one of the claims 1 to 8, **characterized in that** the protective helmet has an inner layer (15) accommodated by the outer shell (1) for damping impact forces, and that the line assembly (4) is at least partially disposed between the outer shell (1) and the inner layer (15).

10. The protective motorcycle helmet according to any one of the claims 1 to 9, **characterized in that** the digital device is a radio module for a Wireless Personal Area Network (WPAN), in particular, that the digital device is a radio module for Bluetooth.

11. The protective helmet according to any one of the claims 1 to 10, **characterized in that** the protective helmet has a device socket (16), which is coupled electrically to the line assembly (4) and mechanically, preferably firmly, to the outer shell (1), for coupling to the electric apparatus (5), in particular, that the device socket (16) is configured for preferably detachably accommodating the electric apparatus (5).

12. The protective helmet according to claim 11, **characterized in that** the device socket (16) has a device frame (17), which consists substantially of plastic and is disposed inside the outer shell (1), for positively accommodating the electric apparatus (5) with a device frame opening (18) for inserting the electric apparatus (5) into the device frame (17).

13. The protective helmet according to claim 12, **characterized in that** the device frame (17) is adjacent to a lower edge of the outer shell (1) and that the device frame opening (18) is substantially disposed at the lower edge of the outer shell (1), preferably, that the device frame (17), starting at the device frame opening (18), substantially extends along the outer shell (1), in particular such that the electric apparatus (5) is inserted into the device frame (17) substantially in a vertically upward direction.

14. The protective helmet according to claim 12 or 13, **characterized in that** the device frame opening (18) is disposed laterally offset from a vertical central longitudinal plane (9) of the protective helmet, preferably, that the device frame opening (18) is disposed substantially in a manner mirrored across the central longitudinal plane (9), relative to the battery frame opening (7).

15. The protective helmet according to any one of the claims 1 to 14, **characterized in that** the protective helmet has a charging device for receiving electrical energy and for charging the accommodated battery (3) with the received electrical energy, preferably, that the device socket (16) has a charging pole, in particular a charging contact, for receiving the electrical energy.

## Revendications

1. Casque de protection, notamment casque de moto, pourvu d'une coque extérieure (1), destinée à répartir les forces d'impact, pourvu d'un emplacement connecteur de batterie (2) fixement relié avec la coque extérieure (1), destiné à la réception amovible d'une batterie (3) et pourvu d'un ensemble de conduits (4) connecté électriquement sur l'emplacement connecteur de batterie (2), pour assurer l'alimentation électrique d'un dispositif électrique (5) mécaniquement couplé avec la coque extérieure (1) par la batterie (3) réceptionnée, l'emplacement connecteur de batterie (2) comportant un ensemble de pôles (14) pour le couplage électrique et amovible de la batterie (3) réceptionnée et le dispositif électrique étant un dispositif numérique pour la communication sans fil, **caractérisé en ce que** l'emplacement connecteur de batterie (2) comporte un cadre de batterie (6) placé sur la face interne vers la coque extérieure, destiné à réceptionner par complémentarité de forme la batterie (3), doté d'une ouverture de cadre de batterie (7), destinée à insérer la batterie (3) dans le cadre de batterie (6), **en ce que** le cadre de batterie (6) est adjacent à un bord inférieur de la coque extérieure (1) et **en ce que** l'ouverture de cadre de batterie (7) est sensiblement placée sur le bord inférieur de la coque extérieure (1).

2. Casque de protection selon la revendication 1, **caractérisé en ce que** le cadre de batterie (6) est majoritairement constitué d'une matière plastique

3. Casque de protection selon la revendication 1 ou 2, **caractérisé en ce que** le cadre de batterie (6) s'étend en partant de l'ouverture de cadre de batterie (7) sensiblement le long de la coque extérieure (1), notamment de sorte que l'on insère la batterie (3) sensiblement dans une direction supérieure verticale dans le cadre de batterie (6).

4. Casque de protection selon l'une quelconque des revendications 1 à 3, **caractérisé en ce que** l'ouverture de cadre de batterie (7) est placée avec un déport latéral par rapport à un plan longitudinal médian (9) vertical du casque de protection, de préférence **en ce que** l'ouverture de cadre de batterie (7) est placée sensiblement au centre entre une position arrière extrême et une position latérale (10) extrême, le long du bord inférieur de la coque extérieure (1).

5. Casque de protection selon l'une quelconque des revendications 1 à 4, **caractérisé en ce que** le casque de protection comporte une finition de casque (8) solidement reliée avec la coque extérieure (1), de préférence constituée majoritairement de matière plastique, pour recouvrir au moins partiellement un bord inférieur de la coque extérieure (1), de préférence également pour délimiter par le bas le casque de protection, notamment **en ce que** le cadre de batterie (6) est fixement relié, de préférence par complémentarité de forme avec la finition de casque (8).

6. Casque de protection selon l'une quelconque des revendications 1 à 5, **caractérisé en ce que** l'emplacement connecteur de batterie (2) comporte un dispositif à ressort, destiné à précontraindre la batterie (3) réceptionnée dans la direction d'éjection et un ensemble de blocage (11) doté d'un dispositif de prise (12), destiné à maintenir par complémentarité de forme la batterie (3) réceptionnée dans le cadre de batterie (6), de préférence **en ce que** l'ensemble de blocage (11) comporte un dispositif de désolidarisation (13), destiné à désolidariser le dispositif de prise (12) et à éjecter la batterie (3) réceptionnée hors du cadre de batterie (6), notamment **en ce que** le dispositif de désolidarisation (13) est actionnable par pression.

7. Casque de protection selon l'une quelconque des revendications 1 à 6, **caractérisé en ce que** l'ensemble de pôles (14) comporte au moins un pôle de puissance (14a), destiné à transmettre de l'énergie électrique et au moins un pôle de signal (14b), destiné à assurer la communication avec la batterie (3) réceptionnée.

8. Casque de protection selon la revendication 7, **caractérisé en ce que** l'ensemble de pôles (14) est placé sur une paroi du cadre de batterie (6) qui est située à l'opposée de l'ouverture de cadre de batterie (7).

9. Casque de protection selon l'une quelconque des revendications 1 à 8, **caractérisé en ce que** le casque de protection comporte une couche interne (15) réceptionnée par la coque extérieure (1), destinée à amortir des forces d'impact et **en ce que** l'ensemble de conduits (4) est placé au moins en partie entre la coque extérieure (1) et la couche interne (15).

10. Casque de protection selon l'une quelconque des revendications 1 à 9, **caractérisé en ce que** le dispositif numérique est un module radio pour un Wireless Personal Area Network (WPAN), notamment **en ce que** le dispositif numérique est un module radio pour le Bluetooth.

11. Casque de protection selon l'une quelconque des revendications 1 à 10, **caractérisé en ce que** le casque de protection comporte un emplacement connecteur d'appareil (16), électriquement couplé avec l'ensemble de conduits (4) et mécaniquement couplé, de préférence fixement avec la coque extérieure (1), destiné à être couplé avec le dispositif électrique (5), notamment **en ce que** l'emplacement connecteur d'appareil (16) est aménagé pour réceptionner, de préférence de manière amovible le dispositif électrique (5).

12. Casque de protection selon la revendication 11, **caractérisé en ce que** l'emplacement connecteur d'appareil (16) comporte un cadre d'appareil (17), de préférence majoritairement constitué d'une matière plastique, placé sur la face intérieure vers la coque extérieure (1), destiné à recevoir par complémentarité de forme le dispositif électrique (5), pourvu d'une ouverture de cadre d'appareil (18), destinée à insérer le dispositif électrique (5) dans le cadre d'appareil (17).

13. Casque de protection selon la revendication 12, **caractérisé en ce que** le cadre d'appareil (17) est adjacent à un bord inférieur de la coque extérieure (1) et **en ce que** l'ouverture de cadre d'appareil (18) est sensiblement placée sur le bord inférieur de la coque extérieure (1), de préférence **en ce que** le cadre d'appareil (17) s'étend à partir de l'ouverture de cadre d'appareil (18), sensiblement le long de la coque extérieure (1), notamment de telle sorte que l'on insère le dispositif électrique (5) sensiblement dans une direction supérieure verticale dans le cadre d'appareil (17).

14. Casque de protection selon la revendication 12 ou 13, **caractérisé en ce que** l'ouverture de cadre d'appareil (18) est placée avec un déport latéral par rapport à un plan longitudinal médian (9) vertical du casque de protection, de préférence **en ce que** l'ouverture de cadre d'appareil (18) est placée sensiblement en symétrie spéculaire sur le plan longitudinal médian (9) de l'ouverture de cadre de batterie (7).

15. Casque de protection selon l'une quelconque des revendications 1 à 14, **caractérisé en ce que** le casque de protection comporte un dispositif de charge, destiné à recevoir de l'énergie électrique et à charger la batterie (3) réceptionnée avec l'énergie électrique reçue, de préférence **en ce que** l'emplacement connecteur d'appareil (16) comporte un pôle de chargement, notamment un contact de chargement, destiné à recevoir l'énergie électrique.
